# EUROPÄISCHE PATENTANMELDUNG

(11) **EP 3 599 218 A1**
(43) Veröffentlichungstag der Anmeldung: **29.01.2020**
(21) Anmeldenummer: 19020464.4
(22) Anmeldetag: 01.10.2015
(51) Int. Cl.: C01B 3/38, C01B 3/48

(54) **VERFAHREN UND ANLAGE ZUR ERZEUGUNG VON SYNTHESEGAS MIT VARIABLER ZUSAMMENSETZUNG**

(62) Teilanmeldung aus: 15400041.8
(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Polster, Bernd, 94340 Joinville-le-Pont (FR); Hernandez, Antoine, 94503 Champigny-Sur-Marne (FR)
(74) Vertreter: Dropsch, Holger

(57) **Zusammenfassung**

Es wird ein Verfahren und eine Anlage zur kontinuierlichen Umwandlung eines kohlenwasserstoffhaltigem Einsatzgases in ein Kohlenmonoxid und Wasserstoff umfassendes Synthesegas angegeben, wobei das H₂/CO-Molverhältnis der Produktgase in einem weiten Bereich verändert werden kann. Erfindungsgemäß wird dies dadurch erreicht, dass zumindest ein Teil eines bei der Auftrennung des Rohsynthesegases, beispielsweise durch kryogene Zerlegung, erhaltenen methanreichen Gases dem Einsatzgasgemisch beigemischt wird und dass alternativ
- zumindest ein Teil des H₂-Produktgases und/oder ein gegenüber dem Normalbetrieb des Verfahrens erhöhter Anteil eines wasserstoffreichen Gases dem Heizgasgemisch beigemischt wird, um das H₂/CO-Verhältnis abzusenken oder
- zumindest ein Teil des CO-Produktgases und/oder ein gegenüber dem Normalbetrieb des Verfahrens erhöhter Anteil eines kohlenmonoxidreichen Gases dem Heizgasgemisch beigemischt wird, um das H₂/CO-Verhältnis zu erhöhen.

## Beschreibung

### Gebiet der Erfindung

Die Erfindung betrifft ein Verfahren und eine Anlage zur kontinuierlichen Umwandlung eines kohlenwasserstoffhaltigem Einsatzgases in ein Kohlenmonoxid und Wasserstoff umfassendes Synthesegas. Insbesondere betrifft die Erfindung ein Verfahren und eine Anlage zur kontinuierlichen Erzeugung von Synthesegasen mit variablem Molverhältnis von Wasserstoff zu Kohlenmonoxid.

### Stand der Technik

Verfahren und Anlagen der eingangs beschriebenen Art sind aus dem Stand der Technik bekannt und z. B. in der amerikanischen Patentschrift US 8,888,873 B2 beschrieben.

Das Molverhältnis von Wasserstoff zu Kohlenmonoxid (H₂/CO-Verhältnis, mol/mol) eines mittels eines derartigen Verfahrens bzw. in einer derartigen Anlage erzeugten Synthesegases wird im Wesentlichen durch die folgenden chemischen Gleichgewichtsreaktionen bestimmt:

CH₄ + H₂O = CO + 3 H₂

CO + H₂O = CO₂ + H₂

Die Höhe des H₂/CO-Verhältnisses im Synthesegas wird durch die Höhe der Molverhältnis zwischen Kohlenstoff und Dampf im Einsatzgas, von der Wirksamkeit des Reformierungskatalysators und durch die Höhe der bei den Reformierungsreaktionen herrschenden Drücke und Temperaturen bestimmt. Eine weitere bekannte Möglichkeit zur Einstellung des H₂/CO-Molverhältnisses besteht in der Einstellung des Kohlendioxidgehaltes im Einsatzgas, wie es ebenfalls in der Patentschrift US 8,888,873 B2 gelehrt wird. Allerdings ist die Einstellung bzw. die Variation des H₂/CO-Verhältnisses nur in relativ engen Grenzen möglich. Gleichzeitig besteht der Bedarf, möglichst mit derselben Produktionsanlage Synthesegase mit stark unterschiedlichen H₂/CO-Verhältnissen zu erzeugen, um die Bedürfnisse verschiedener nachgeschalteter Verfahren im Rahmen integrierter Produktionsverbünde zu befriedigen.

Es ist die daher Aufgabe der Erfindung, ein Verfahren und eine Anlage zur Verfügung zu stellen, die die Einstellung des H₂/CO-Molverhältnisses in weiteren Grenzen ermöglicht, als dies bislang aus dem Stand der Technik bekannt ist.

### Beschreibung der Erfindung

Die Aufgabe wird gelöst durch ein Verfahren gemäß den Merkmalen der Ansprüche 1 oder 2 und eine Anlage gemäß den Merkmalen des Anspruchs 11.

### Erfindungsgemäßes Verfahren:

Verfahren zur kontinuierlichen Umwandlung eines kohlenwasserstoffhaltigen Einsatzgases in ein Kohlenmonoxid und Wasserstoff umfassendes Synthesegas, umfassend die folgenden, nacheinander durchgeführten Verfahrensschritte:
a) Bereitstellen eines Einsatzgasgemisches, welches kohlenwasserstoffhaltiges Gas und Wasserdampf umfasst, sowie eines Heizgasgemisches, welches ein Brenngas und ein sauerstoffreiches Gas umfasst,
b) Spalten des Einsatzgasgemisches unter Reformierungsbedingungen durch katalytische Dampfreformierung in einem durch Brenner befeuerten Röhrenreformer in ein Wasserstoff, Kohlenmonoxid, Kohlendioxid und Methan enthaltendes Rohsynthesegas, wobei die für das Spalten notwendige Wärme, die indirekt auf das Einsatzgasgemisch übertragen wird, durch Verbrennen des Heizgasgemisches erzeugt wird, wobei beim Normalbetrieb des Verfahrens ein Basis-H₂/CO-Verhältnis VB erhalten wird,
c) Abtrennen des Kohlendioxids aus dem Rohsynthesegas,
d) Auftrennen des Rohsynthesegases in ein wasserstoffreiches, ein kohlenmonoxidreiches und ein methanreiches Gas, wobei das wasserstoffreiche Gas optional einem weiteren Reinigungsschritt zugeführt wird und ansonsten als H₂-Produktgas aus dem Verfahren ausgeleitet wird und das kohlenmonoxidreiche Gas als CO-Produktgas der weiteren Verwendung außerhalb des Verfahrens zugeführt wird,
e) Optional Reinigen des wasserstoffreichen Gases durch Abtrennung von gasförmigen Verunreinigungen und Beimischen dieser zum Heizgasgemisch und Ausleiten des gereinigten, wasserstoffreichen Gases als H₂-Produktgas zur weiteren Verwendung außerhalb des Verfahrens
   dadurch gekennzeichnet, dass
f) zumindest ein Teil des gemäß Schritt d) erhaltenen methanreichen Gases dem Einsatzgasgemisch beigemischt wird und dass
g) zumindest ein Teil des H₂-Produktgases und/oder ein gegenüber dem Normalbetrieb des Verfahrens erhöhter Anteil des wasserstoffreichen Gases dem Heizgasgemisch beigemischt wird, so dass das H₂/CO-Verhältnis V1 gegenüber dem Basis-H₂/CO-Verhältnis VB auf einen Zielwert V1 < VB abgesenkt wird.

### Erfindungsgemäßes Verfahren in alternativer Ausgestaltung:

Verfahren zur kontinuierlichen Umwandlung eines kohlenwasserstoffhaltigen Einsatzgases in ein Kohlenmonoxid und Wasserstoff umfassendes Synthesegas, umfassend die folgenden, nacheinander durchgeführten Verfahrensschritte:
a) Bereitstellen eines Einsatzgasgemisches, welches kohlenwasserstoffhaltiges Gas und Wasserdampf umfasst, sowie eines Heizgasgemisches, welches ein Brenngas und ein sauerstoffreiches Gas umfasst,
b) Spalten des Einsatzgasgemisches unter Reformierungsbedingungen durch katalytische Dampfreformierung in einem durch Brenner befeuerten Röhrenreformer in ein Wasserstoff, Kohlenmonoxid, Kohlendioxid und Methan enthaltendes Rohsynthesegas, wobei die für das Spalten notwendige Wärme, die indirekt auf das Einsatzgasgemisch übertragen wird, durch Verbrennen des Heizgasgemisches erzeugt wird, wobei beim Normalbetrieb des Verfahrens ein Basis-H₂/CO-Verhältnis VB erhalten wird,
c) Abtrennen des Kohlendioxids aus dem Rohsynthesegas,
d) Auftrennen des Rohsynthesegases in ein wasserstoffreiches, ein kohlenmonoxidreiches und ein methanreiches Gas, wobei das wasserstoffreiche Gas optional einem weiteren Reinigungsschritt zugeführt wird und ansonsten als H₂-Produktgas aus dem Verfahren ausgeleitet wird und das kohlenmonoxidreiche Gas als CO-Produktgas der weiteren Verwendung außerhalb des Verfahrens zugeführt wird,
e) Optional Reinigen des wasserstoffreichen Gases durch Abtrennung von gasförmigen Verunreinigungen und Beimischen dieser zum Heizgasgemisch und Ausleiten des gereinigten, wasserstoffreichen Gases als H₂-Produktgas zur weiteren Verwendung außerhalb des Verfahrens
   dadurch gekennzeichnet, dass
f) zumindest ein Teil des gemäß Schritt d) erhaltenen methanreichen Gases dem Einsatzgasgemisch beigemischt wird und dass
g) zumindest ein Teil des CO-Produktgases und/oder ein gegenüber dem Normalbetrieb des Verfahrens erhöhter Anteil des kohlenmonoxidreichen Gases dem Heizgasgemisch beigemischt wird, so dass das H₂/CO-Verhältnis V1 gegenüber dem Basis-H₂/CO-Verhältnis VB auf einen Zielwert V1 > VB erhöht wird.

### Erfindungsgemäße Anlage:

Anlage zur kontinuierlichen Umwandlung eines kohlenwasserstoffhaltigen Einsatzgases in ein Kohlenmonoxid und Wasserstoff umfassendes Synthesegas, umfassend die folgenden Mittel und Anlagenteile:
a) Mittel zur Zuführung eines Einsatzgasgemisches, welches kohlenwasserstoffhaltiges Gas und Wasserdampf umfasst, sowie eines Heizgasgemisches, welches ein Brenngas und ein sauerstoffreiches Gas umfasst, aus externen Quellen zur Anlage, sowie Mittel für den Transfer des bzw. der Gase zwischen den Anlagenteilen und aus der Anlage heraus zu deren weiterer Verwendung,
b) Anlagenteil zur Dampfreformierung des Einsatzgasgemisches zu einem Rohsynthesegas, mit einem durch Brenner befeuerten Röhrenreformer, umfassend:
   ein Gehäuse,
   Katalysatorrohre, die in dem Gehäuse angeordnet und mit einer Katalysatorschüttung gefüllt sind und durch die das Einsatzgasgemisch hindurch geleitet und in Wasserstoff, Kohlenmonoxid, Kohlendioxid und Methan enthaltendes Rohsynthesegas reformiert wird,
   Brenner, die mit dem Heizgasgemisch betrieben werden und die so im Gehäuse installiert sind, dass deren Flammen in das Gehäuse hinein reichen und dabei die für das Reformieren notwendige Wärme erzeugen und auf die Katalysatorrohre, und damit indirekt auf das Einsatzgasgemisch übertragen,
c) Anlagenteil zum Abtrennen des Kohlendioxids aus dem Rohsynthesegas,
d) Anlagenteil zum Auftrennen des Rohsynthesegases in ein wasserstoffreiches Gas, das entweder der Behandlung in Schritt e) oder der weiteren Verwendung ausserhalb der Anlage zugeführt wird, weiterhin in ein kohlenmonoxidreiches Gas, das der weiteren Verwendung außerhalb der Anlage zugeführt wird und ein methanreiches Gas, das dem Einsatzgasgemisch und/oder dem Heizgasgemisch beigemischt wird,
e) Optional einen Anlagenteil zum Reinigen des wasserstoffreichen Gases durch Abtrennung von gasförmigen Verunreinigungen, Mittel zum Beimischen dieser zum Heizgasgemisch und Mittel zum Ausleiten des gereinigten, wasserstoffreichen Gases als H₂-Produktgas zur weiteren Verwendung außerhalb des Verfahrens, gekennzeichnet durch
f) Mittel zum Beimischen zumindest ein Teils des in Anlagenteil d) erhaltenen methanreichen Gases zum Einsatzgasgemisch und
g) Mittel zum Beimischen zumindest ein Teils des H₂-Produktgases und/oder des wasserstoffreichen Gases zum Heizgasgemisch oder Mittel zum Beimischen zumindest ein Teils des CO-Produktgases zum Heizgasgemisch,
h) Mittel zum Regeln der Mengenströme der dem Einsatzgasgemisch und dem Heizgasgemisch beizumischenden Gase.

Unter Normalbetrieb wird dabei eine aus dem Stand der Technik bekannte Betriebsweise der Reformeranlage verstanden, bei der weder methanreiches Gas zum Einsatzgasgemisch noch H₂-Produktgas, wasserstoffreiches Gas oder CO-Produktgas zum Heizgasgemisch zurückgeführt wird.

Unter Reformierungsbedingungen werden die dem Fachmann an sich geläufigen Betriebsbedingungen der Reformeranlage verstanden, die einen technisch und ökonomisch sinnvollen Umsetzungsgrad der Einsatzstoffe zu Synthesegaskomponenten gewährleisten. Ein hierfür gewählter Satz von Betriebsbedingungen wird auch als Betriebspunkt bezeichnet.

In einem Aspekt der Erfindung wird zumindest ein Teil des gemäß Schritt d) erhaltenen methanreichen Gases dem Einsatzgasgemisch beigemischt. Hierdurch kann, in alternativer Ausgestaltung, entweder
- mindestens ein Teil des H₂-Produktgases und/oder ein gegenüber dem Normalbetrieb des Verfahrens erhöhter Anteil des wasserstoffreichen Gases dem Heizgasgemisch beigemischt werden, so dass das H₂/CO-Verhältnis V1 gegenüber dem Basis-H₂/CO-Verhältnis VB auf einen Zielwert V1 < VB abgesenkt wird, oder alternativ
- mindestens ein Teil des CO-Produktgases und/oder ein gegenüber dem Normalbetrieb des Verfahrens erhöhter Anteil des kohlenmonoxidreichen Gases dem Heizgasgemisch beigemischt werden, so dass das H₂/CO-Verhältnis V1 gegenüber dem Basis-H₂/CO-Verhältnis VB auf einen Zielwert V1 > VB erhöht wird.

Von Bedeutung ist es dabei, dass der Anteil methanreichen Gases, der erfindungsgemäß gegenüber dem Normalbetrieb des Verfahrens nicht dem Heizgasgemisch, sondern dem Einsatzgasgemisch zugemischt wird, durch kalorisch, also hinsichtlich ihres Heizwertes äquivalente Anteile an H₂-Produktgas, wasserstoffreiches Gas oder CO-Produktgas ersetzt wird, um einen stabilen Betrieb der Reformeranlage zu gewährleisten.

### Bevorzugte Ausgestaltungen der Erfindung

Eine bevorzugte Ausgestaltung der Erfindung ist dadurch gekennzeichnet, dass der dem Einsatzgasgemisch beigemischte Anteil methanreichen Gases mindestens 50 %, bevorzugt mindestens 70 %, meist bevorzugt mindestens 90 % des gemäß Schritt d) erhaltenen methanreichen Gases beträgt.

Günstig ist es ferner, wenn dem Heizgasgemisch mindestens 20 %, bevorzugt mindestens 30 %, meist bevorzugt mindestens 40 % des H₂-Produktgases bzw. des wasserstoffreichen Gases zum Heizgasgemisch beigemischt werden, oder, in alternativer Ausgestaltung, dem Heizgasgemisch mindestens 20 %, bevorzugt mindestens 30 %, meist bevorzugt mindestens 40 % des CO-Produktgases zum Heizgasgemisch beigemischt werden.

Es wurde gefunden, dass innerhalb der vorgenannten Bereiche unter Berücksichtigung der kalorischen Äquivalenz der dem Einsatzgasgemisch und der dem Heizgasgemisch beigemischten Gasströme das H₂/CO-Verhältnis in weiten Grenzen einstellbasr ist, während gleichzeitig ein stabiler und störungsfreier Betrieb der Reformeranlage bei ausgeglichenem Wärmehaushalt ermöglicht wird.

Eine weitere bevorzugte Ausgestaltung der Erfindung ist dadurch gekennzeichnet, dass das Verfahren es in den folgenden zeitlich aufeinanderfolgenden Schritten durchgeführt wird:
Schritt 1: Das H₂-Produktgas oder das wasserstoffreiche Gas oder das CO-Produktgas wird vollständig dem Heizgasgemisch beigemischt.
Schritt 2: Das H₂-Produktgas oder das wasserstoffreiche Gas oder das CO-Produktgas wird zu einem Anteil dem Heizgasgemisch beigemischt und zum anderen Anteil zur weiteren Verwendung außerhalb des Verfahrens ausgeleitet, wobei der ausgeleitete Anteil kontinuierlich oder schrittweise erhöht oder reduziert wird, bis der Zielwert V1 des H₂/CO-Verhältnisses erreicht ist.

Diese Verfahrensweise ermöglicht es, die Veränderung der zum externen Verbraucher gelieferten CO- und/oder H₂-Menge schneller zu vollziehen, als es auf herkömmliche Weise möglich ist.

Bevorzugt wird das aus dem Rohsynthesegas abgetrennte Kohlendioxid zumindest zum Teil dem Einsatzgasgemisch beigemischt. Auf diese Weise kann das abgetrennte Kohlendioxid zumindest zum Teil stofflich genutzt werden. Ferner ist somit eine weitere Beeinflussung des H₂/CO-Verhältnisses möglich.

In noch stärkerem Maße kann das H₂/CO-Verhältnis durch die Beimischung von außerhalb des Verfahrens erzeugten Kohlendioxids zum Einsatzgasgemisch beeinflusst werden. Vorteilhafterweise wird somit gleichzeitig eine Senke für im Überschuss vorhandenes oder unerwünschtes, verfahrensfremdes Kohlendioxid geschaffen.

In bevorzugter Ausgestaltung des erfindungsgemäßen Verfahrens wird die Trennung des Rohsynthesegases in ein wasserstoffreiches, ein kohlenmonoxidreiches und ein methanreiches Gas mittels eines kryogenen Destillationsverfahrens durchgeführt, wobei ein weiterer, brennbare Gaskomponenten enthaltender Gasstrom (Coldbox-Flashgas) erhalten wird, der mindestens teilweise dem Heizgasgemisch und/oder dem Einsatzgasgemisch beigemischt wird. Dies ermöglicht die thermische und/oder stoffliche Nutzung des Coldbox-Flashgases. Diese Verfahrensweise und derartige Anlagen sind im praktischen Betrieb bewährt und werden im allgemeinen Sprachgebrauch als Coldbox bezeichnet (CB).

Bei der Durchführung des erfindungsgemäßen Verfahrens wird es ferner bevorzugt, dass die Reinigung des wasserstoffreichen Gases durch Abtrennung von gasförmigen Verunreinigungen mittels eines Druckwechseladsorptionsverfahrens (PSA) durchgeführt wird, wobei die gasförmigen Verunreinigungen als separater Gasstrom anfallen (PSA-Offgas) und mindestens teilweise dem Heizgasgemisch beigemischt werden. Dies ermöglicht die thermische Nutzung des PSA-Offgases.

Eine weitere bevorzugte Ausgestaltung der Erfindung ist dadurch gekennzeichnet, dass das Abtrennen des Kohlendioxids aus dem Rohsynthesegas mittels eines Absorptionsverfahrens, durchgeführt in einer entsprechenden Absorptionsanlage, unter Verwendung von z. B. Methyldiethanolamin (MDEA) als Absorptionsmittel erfolgt. Dieses Verfahren bzw. eine derartige Anlage wird z. B. in Ullmann's Encyclopedia of Industrial Chemistry, Sixth Edition, Vol. 15, Seite 410 beschrieben. Es handelt sich um seit langem bewährte Verfahren bzw. Anlagen. Vorteilhaft ist es dabei, das Kohlendioxid effizient aus dem Rohsynthesegas abgetrennt und weiterverwendet werden kann, beispielsweise für die Rückführung zum Einsatzgasgemisch.

In bevorzugter Ausgestaltung der erfindungsgemäßen Anlage umfasst diese auch Mittel zur Rückführung des aus dem Rohsynthesegas abgetrennten Kohlendioxids zum Einsatzgasgemisch und/oder durch Mittel zur Zuführung von außerhalb des Verfahrens erzeugten Kohlendioxids zum Einsatzgasgemisch.

In weiterer bevorzugter Ausgestaltung der erfindungsgemäßen Anlage ist der Anlagenteil zur Trennung des Rohsynthesegases in ein wasserstoffreiches, ein kohlenmonoxidreiches und ein methanreiches Gas als kryogenes Destillationsverfahren ausgestaltet, wobei ferner Mittel zum Ausleiten eines weiteren, brennbare Gaskomponenten enthaltenden Gasstroms (Coldbox-Flashgas) umfasst werden.

In weiterer bevorzugter Ausgestaltung der erfindungsgemäßen Anlage ist der Anlagenteil zur Reinigung des wasserstoffreichen Gases durch Abtrennung von gasförmigen Verunreinigungen als Druckwechseladsorptionsverfahren (PSA) ausgestaltet, wobei ferner Mittel zum Ausleiten eines weiteren, gasförmige Verunreinigungen (PSA-Offgas) enthaltenden Gasstroms und zum mindestens teilweise Beimischen dieser zum Heizgasgemisch umfasst werden.

### Ausführungs- und Zahlenbeispiele

Weitere Merkmale, Vorteile und Anwendungsmöglichkeiten der Erfindung ergeben sich auch aus der nachfolgenden Beschreibung von Ausführungs- und Zahlenbeispielen und den Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Anhand der Zeichnungen soll die Erfindung erläutert werden. Dabei zeigen:
- Fig. 1: ein Blockdiagramm eines Verfahrens gemäß Stand der Technik,
- Fig. 2: ein Blockdiagramm eines alternativen Verfahrens gemäß Stand der Technik mit Kohlendioxid-Rückführung und Zufuhr von externem Kohlendioxid,
- Fig. 3: ein Blockdiagramm einer ersten beispielhaften Ausgestaltung der Erfindung, basierend auf Fig. 2,
- Fig. 4: ein Blockdiagramm einer zweiten beispielhaften Ausgestaltung der Erfindung, basierend auf Fig. 3, mit zusätzlicher CO-Shift-Stufe.

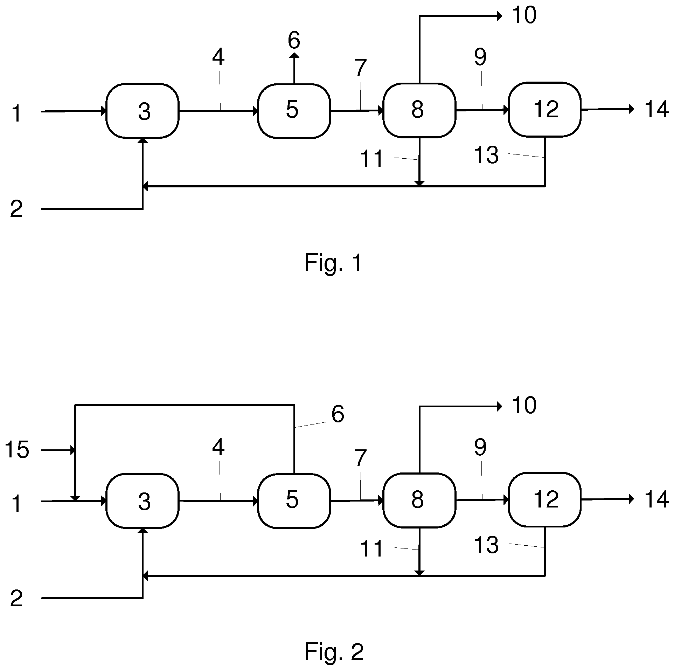

### Fig. 1, Vergleichsbeispiel gemäß Stand der Technik

Das Einsatzgasgemisch 1, umfassend kohlenwasserstoffhaltiges Gas und Wasserdampf, sowie das Heizgasgemisch 2, umfassend ein Brenngas und ein sauerstoffreiches Gas, werden einem Reformer 3 aufgegeben. Im Reformer 3 wird das Einsatzgasgemisch 1 in ein Rohsynthesegas 4, umfassend Wasserstoff, Kohlenmonoxid, Kohlendioxid und Methan sowie Wasser, eventuell Stickstoff und dem Fachmann bekannte Verunreinigungen, umgewandelt. Das Rohsynthesegas 4 wird aus dem Reformer 3 in eine Anlage 5 zur Abtrennung des Kohlendioxids 6 aus dem Rohsynthesegas 4 übergeleitet. Diese Abtrennung in Anlage 5 kann beispielsweise mittels eines Absorptionsverfahrens unter Verwendung von Methyldiethanolamin (MDEA) erfolgen. Das abgetrennte Kohlendioxid 6 wird aus der Anlage 5 ausgeleitet und einer weiteren Verwendung zugeführt oder in die Umgebung abgegeben. Das von Kohlendioxid befreite Rohsynthesegas 7 wird von Anlage 5 in eine Anlage 8 zur Auftrennung des Rohsynthesegases in ein wasserstoffreiches Gas 9, ein kohlenmonoxidreiches Gas 10 und ein methanreiches Gas 11 geleitet. Diese Auftrennung in Anlage 8 kann beispielsweise mittels eines kryogenen Destillationsverfahrens erfolgen. Das methanreiche Gas 11 wird in diesem Beispiel dem Heizgasgemisch 2 beigefügt. Das kohlenmonoxidreiche Gas 10 wird zur weiteren Verwendung als Produktgas ausgeleitet und das wasserstoffreiche Gas 9 wird in diesem Beispiel einer Anlage 12 zur Abtrennung gasförmiger Verunreinigungen zugeführt. Zur Durchführung dieser Abtrennung kann ein Druckwechseladsorptionsverfahren zum Einsatz kommen. Die dabei abgetrennten gasförmigen Verunreinigungen werden dem Heizgasgemisch 2 beigemischt. Das gereinigte, wasserstoffreiche Gas 14 wird zur weiteren Verwendung als H₂-Produktgas aus der Anlage ausgeleitet.

Bei Verwendung einer kryogenen Destillationsanlage zur Auftrennung des vom Kohlendioxide befreiten Rohsynthesegases 7 wird bereits eine hohe Reinheit des wasserstoffreichen Gases 9 erreicht, die typischerweise im Bereich von 95 % bis 99 %, bezogen auf den molaren Wasserstoffanteil, liegt. Abhängig von der geforderten Reinheit des H₂-Produktstromes ist normalerweise eine weitere Reinigung dieses Stromes nötig um eine Wasserstoffreinheit im Bereich von 99,9 % bis 99,999 %, auf den molaren Wasserstoffanteil bezogen, zu erzielen. In seltenen Fällen ist diese Reinigung nicht nötig.

### Fig. 2, Vergleichsbeispiel gemäß Stand der Technik

In diesem Beispiel wird das in Anlage 5 mittels eines Absorptionsverfahrens aus dem Rohsynthesegas 5 abgetrennte Kohlendioxid 6, zusätzlich mit extern gewonnenem Kohlendioxid 15, den Einsatzgasen 1 beigefügt.

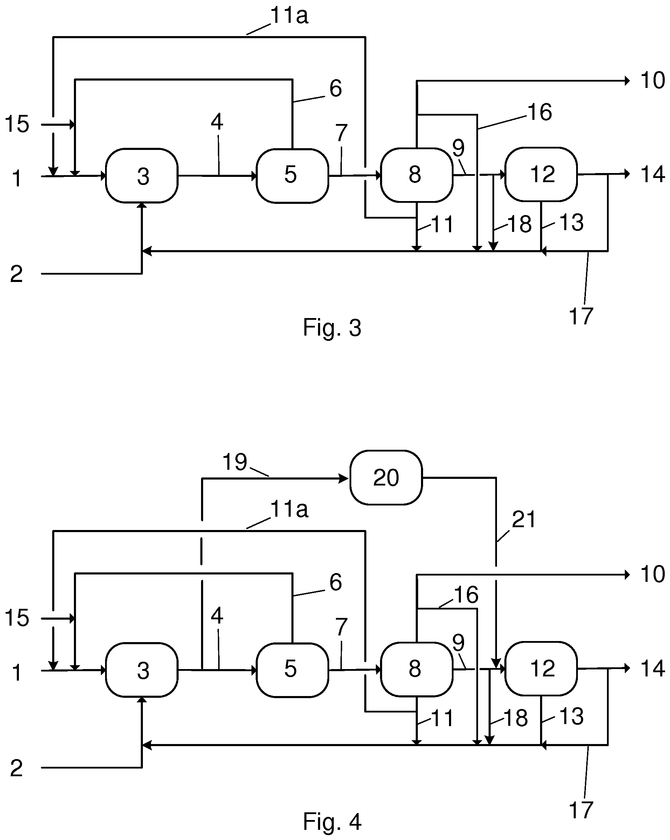

### Fig. 3, Ausführungsbeispiel Erfindung

Dieses Beispiel zeigt eine Anlage gemäß Fig. 2, bei der zusätzlich ein Teil des kohlenmonoxidreichen Produktgases 16 und/oder des wasserstoffreichen Gases18 bzw. des H₂-Produktgases 17 zurückgeführt wird und dem Heizgasgemisch 2 beigemischt wird. Ferner wird ein Teil des methanreichen Gases 11a aus der kryogenen Destillationsanlage (Coldbox) 8 in das Einsatzgasgemisch zurückgeführt. Der verbliebene Anteil methanreichen Gases 11 wird dem Heizgasgemisch zugemischt.

Da der aus der kryogenen Destillationsanlage bereitgestellte wasserstoffreiche Gasstrom 18 bereits einen sehr hohen Wasserstoffgehalt hat, kann erfindungsgemäß auch dieser in das Heizgasgemisch beigemischt werden, um das H₂/CO-Verhältnis abzusenken. Es muss folglich nicht notwendigerweise ein Teilstrom des gereinigten H₂-Produktstromes dem Heizgasgemisch beigemischt werden.

### Fig. 4, Ausführungsbeispiel Erfindung

Dieses Beispiel zeigt eine Anlage gemäß Fig. 3, allerdings ohne die Rückführung von aus dem Rohsynthesegas abgetrenntem oder von externen Quellen importiertem CO₂. Ferner enthält dieses Beispiel eine CO-Shift-Stufe 20, die mit einem Teilstrom des Rohsynthesegases 19 beaufschlagt und aus der ein an Wasserstoff angereicherter Gasstrom 21 ausgeleitet und gemeinsam mit dem wasserstoffreichen Gasstrom 9 aus der Anlage 8 der Druckwechseladsorptionsanlage 12 zugeführt wird.

### Zahlenbeispiele Stand der Technik (Vergleichsbeispiele), Tabellen 1 bis 3

Eine dem Fachmann bekannte Möglichkeit zur Einstellung des H₂/CO-Molverhältnisses besteht in der Einstellung des Kohlendioxidgehaltes im Einsatzgas, wie es in den nachfolgenden Tabellen 1 bis 3 veranschaulicht wird.

Ohne Kohlendioxidzugabe ins Einsatzgas ist das H₂/CO-Molverhältnis im Synthesegas im Bereich 3,8 bis 5,4 bzw. als Verhältnis der H₂- und CO-Produktströme im Bereich 3,3 bis 4,7 durch Auswahl der Betriebsbedingungen einstellbar (siehe Tabelle 1). Betriebsbedingungen, die das H₂/CO-Molverhältnis beeinflussen, sind vor allem die Reformertemperatur und das Verhältnis von Dampf zu Kohlenstoff (S/C-Verhältnis) im Einsatzgas und in geringerem Maße auch der Reformerdruck und die Wirkungsgrade der CO- und H₂-Reinigungsvorrichtungen.

**Tabelle 1: Vergleich der H₂/CO-Verhältnisse für die Produkt- und Synthesegasströme für verschiedene Betriebsbedingungen (Reformertemperatur, S/C-Verhältnis) bei einem Reformerdruck von 25 bara, für einen Einsatz aus 100% CH₄, mit einem CO- und H₂-Wirkungsgrad von 97% für die kryogene Destillationsanlage und einem H₂-Wirkungsgrad von 87% für das Druckwechseladsorptionsverfahren**

| **Fall** | **A** | **B** | **C** | **D** | **E** | **F** | **G** | **H** | **I** |
|---|---|---|---|---|---|---|---|---|---|
| S/C-Verhältnis | 2.5 | 2.5 | 2.0 | 2.0 | 2.0 | 2.0 | 1.8 | 1.8 | 1.6 |
| Reformertemperatur (°C) | 850 | 880 | 850 | 880 | 900 | 920 | 920 | 940 | 940 |
| CO Produktstrom (Nm³/h) | 10000 | 10000 | 10000 | 10000 | 10000 | 10000 | 10000 | 10000 | 10000 |
| H₂-Produktstrom (Nm³/h) | 46250 | 42475 | 42920 | 39450 | 37670 | 36250 | 35150 | 34030 | 33000 |
| CH₄-Einsatzstrom (Nm³/h) | 23100 | 19670 | 23920 | 20180 | 18320 | 16850 | 17070 | 15840 | 16115 |
| H₂/CO im Synthesegas | 5.37 | 4.94 | 5.01 | 4.60 | 4.39 | 4.22 | 4.09 | 3.96 | 3.84 |
| CO₂-Anteil im Synthesegas (Nm³/h) | 5980 | 4860 | 5000 | 3960 | 3440 | 3010 | 2690 | 2360 | 2050 |
| CH₄-Anteil im Synthesegas (Nm³/h) | 6815 | 4500 | 8630 | 5910 | 4580 | 3530 | 4070 | 3170 | 3750 |

Mit teilweiser bis vollständiger Rückführung des aus dem Synthesegas abgetrennten Kohlendioxids in das Einsatzgas sind Verhältnisse von 2,6 bis 3,3 einstellbar, bezogen auf die Produktströme (siehe Tabelle 2) bzw. von 3,8 bis 3,0 im Synthesegas. Das Verhältnis ist auf den Bereich von 1,4 bis 2,6 absenkbar, bezogen auf die Produktströme (siehe Tabelle 3), bzw. von 1,6 bis 3,0 im Synthesegas, wenn zusätzlich zur vollständigen Kohlendioxidrückführung noch aus einer externen Quelle stammendes Kohlendioxid dem Einsatzgas beigemischt wird, wobei die Menge des dem Einsatzgas beigemischten, aus einer externen Quelle stammenden Kohlendioxids maßgeblich das Verhältnis beeinflusst.

**Tabelle 2: Vergleich der H₂/CO-Verhältnisse für die Produkt- und Synthesegasströme für die gleichen Betriebsbedingungen wie für Tabelle 1 (abgeleitete Fälle A, D, F, H) und mit einer zusätzlichen CO₂-Beimischung von 95% des aus dem Rohsynthesegas abgetrennten Kohlendioxids zum Einsatzgasgemisch**

| **Fall** | **A-2** | **D-2** | **F-2** | **H-2** |
|---|---|---|---|---|
| S/C-Verhältnis | 2.5 | 2.0 | 2.0 | 1.8 |
| Reformertemperatur (°C) | 850 | 880 | 920 | 940 |
| CO-Produktstrom (Nm³/h) | 10000 | 10000 | 10000 | 10000 |
| H₂-Produktstrom (Nm³/h) | 27380 | 26920 | 26715 | 26570 |
| CH₄-Einsatzstrom (Nm³/h) | 14670 | 14405 | 12910 | 12735 |
| H₂/CO im Synthesegas | 3.19 | 3.14 | 3.11 | 3.09 |
| CO₂-Anteil im Synthesegas (Nm³/h) | 7280 | 4740 | 3570 | 2760 |
| CH₄-Anteil im Synthesegas (Nm³/h) | 3990 | 3860 | 2420 | 2290 |

**Tabelle 3: Vergleich der H₂/CO-Verhältnisse für die Produkt- und Synthesegasströme für die gleichen Betriebsbedingungen wie für Tabelle 1 und 2 (abgeleiteter Fall F-2 aus Tabelle 2) mit zusätzlicher Beimischung von aus einer externen Quelle stammenden CO₂ zum Einsatzgasgemisch**

| **Fall** | **F-2** | **F-2-I** | **F-2-II** | **F-2-III** |
|---|---|---|---|---|
| Extern gewonnenes CO₂ zum Einsatzgas (Nm³/h) | 0 | 1000 | 2000 | 4000 |
| S/C-Verhältnis | 2.0 | 2.0 | 2.0 | 2.0 |
| Reformertemperatur (°C) | 920 | 920 | 920 | 920 |
| CO-Produktstrom (Nm³/h) | 10000 | 10000 | 10000 | 10000 |
| H₂-Produktstrom (Nm³/h) | 26715 | 23460 | 20205 | 13805 |
| CH₄-Einsatzstrom (Nm³/h) | 12910 | 11550 | 10175 | 7490 |
| H₂/CO im Synthesegas | 3.11 | 2.73 | 2.35 | 1.61 |
| CO₂-Anteil im Synthesegas (Nm³/h) | 3570 | 3850 | 4230 | 5470 |
| CH₄-Anteil im Synthesegas (Nm³/h) | 2420 | 2030 | 1620 | 840 |

Anlagen zur Erzeugung von CO und H₂ werden so konzipiert, dass ein vorgegebenes H₂/CO-Molverhältnis der H₂- und CO-Produktströme erreicht wird, indem die Betriebsbedingungen angepasst werden und beispielsweise eine teilweise oder vollständige Rückführung des aus dem Synthesegas abgetrennten Kohlendioxids durchgeführt wird. Ist selbst bei vollständiger CO₂-Rückführung das erzielte H₂/CO-Molverhältnis zu hoch, kann eine Beimischung von extern gewonnenem CO₂ zum Einsatzgasgemisch in Betracht gezogen werden. Es kann unter Umständen auch auf eine Rückführung des vom Synthesegas abgetrennten Kohlendioxids verzichtet werden, wenn extern gewonnenes CO₂ z. B. schon in ausreichender Menge beim Einsatzdruck vorhanden ist. Das externe Kohlendioxid sollte in ausreichender Reinheit vorliegen, wobei Verunreinigungen mit Kohlenstoff-, Stickstoff- und Wasserstoffverbindungen unter Umständen akzeptabel sind, und keine Verbindungen enthalten, die für die Katalysatoren der Dampfreformierungsanlage schädlich sind (wie z. B. Arsen, Schwefel, Chlor, Metalle).

Um die Anlagenkosten niedrig zu halten, können während des Anlagenbetriebs nur kleine Anpassungen der für die Anlagenauslegung gewählten Einsatzparameter getätigt werden, die dann auch nur kleine Änderungen des H₂/CO-Produktverhältnisses gegenüber der ursprünglichen Auslegung erlauben. Abweichungen von maximal 10 % des H₂/CO-Molverhältnisses sind dann möglich. Es treten jedoch im realen Anlagenbetrieb mitunter Lastfälle auf, in denen das H₂/CO-Produktverhältnis deutlich von den möglichen Änderungen abweicht. Da die Schwankungen solcher H₂/CO-Produktverhältnisse teilweise sehr groß sind, aber normalerweise nur kurze Zeit andauern, werden diese Fälle in der Anlagenauflegung normalerweise nicht berücksichtigt und mittels Abfackeln des überschüssigen Produktstroms abgedeckt, was für längere Zeiträume zu hohen Kosten führen kann.

Eine Einstellung von H₂/CO-Molverhältnissen außerhalb dieser Bereiche würde zu einer unwirtschaftlichen Auslegung einzelner Anlagenkomponenten führen, bzw. ist eine auf Normalbetrieb ausgerichtete Anlagenauslegung hinsichtlich der einstellbaren Temperaturhöhen durch die Belastbarkeit der Konstruktionsmaterialien der Anlagenkomponenten begrenzt, oder aber es müssten Überdimensionierungen von Anlagenkomponenten erfolgen deren Wirtschaftlichkeit im normalen Betrieb nicht gegeben ist.

Es müssten eventuell auch zusätzliche Anlagenkomponenten eingesetzt werden; so könnte ein Teilstrom des Rohsynthesegases einer CO-Shift-Stufe zugeführt werden, um das H₂/CO-Verhältnis zu erhöhen oder eine Anlage mit einer hohen Flexibilität hinsichtlich des H₂/CO-Verhältnisses bereitzustellen.

Das während der Anlagenauslegung vorgegebene H₂/CO-Verhältnisses der Produkte ist im Wesentlichen bei verschiedenen Anlagenlastzuständen konstant. Eine Anlage zur Produktion von H₂ und CO kann normalerweise bis zu einer Anlagenlast von ungefähr 20 % bis 40 % der Auslegungslast heruntergefahren werden. Beim Betrieb einer Anlage unter Teillast ist eine höhere Flexibilität des H₂/CO-Produktverhältnisses gegeben. Bei ungefähr 50% Anlagenlast hier sind Abweichungen von ca. 20% des H₂/CO-Molverhältnisses möglich.

### Zahlenbeispiele Erfindung, Tabellen 4 bis 7

Ein Aspekt der Erfindung ist dadurch gekennzeichnet, dass zumindest ein Teil des gemäß Schritt d) von Anspruch 1 erhaltenen methanreichen Gases dem Einsatzgasgemisch beigemischt wird. Durch diese Maßnahme wird der Verbrauch an externem kohlenwasserstoffhaltigem Einsatzgas verringert und es wird gleichzeitig die Beimischung von CO-Produktgas und/oder von H₂-Produktgas zum Heizgasgemisch ermöglicht, wie es in den Tabellen 4, 5, 6 und 7 erläutert wird.

Die Rückführung des methanreichen Gases zum Einsatzgasgemisch kann in Verbindung mit der Rückführung des aus dem Rohsynthesegas abgetrennten Kohlendioxids erfolgen oder unabhängig davon. Bei diesen Rückführungen sind in der Regel Druckerhöhungsmaßnahmen vorgesehen, wie z. B. Verdichter. Das aus dem Rohsynthesegas abgetrennte Kohlendioxid fällt normalerweise bei Umgebungsdruck oder bei einem Druck von bis zu ca. 3 bar an. Der methanreiche Strom kann mit einem dem Kohlendioxid vergleichbaren Druck, aber auch eventuell unter Druck aus dem kryogenen Destillationsverfahren ausgeschleust werden. Im letzteren Fall kann er dann direkt in das Einsatzgas eingegeben werden kann oder er benötigt nur eine im Vergleich zum Kohlendioxid geringfügige Druckerhöhung die auch gemeinsam mit dem Kohlendioxid ausgeführt werden kann, in z. B. einer oder mehreren gemeinsamen letzten Druckerhöhungsstufen eines Kohlendioxidverdichters.

Das Kohlendioxid wird vorzugsweise nach einer eventuellen Vorreformierungseinheit (Prereforming) dem Einsatzgas zugemischt, während die Zumischung des methanhaltigen Gases frei gewählt werden kann. Da das methanhaltige Gas keinen Schwefel enthält, kann, falls es dauerhaft zum Einsatzgas zugemischt wird, die Entschwefelungseinheit der Dampfreformierungsanlage entsprechend verkleinert werden. Falls das methanhaltige Gas mit dem Kohlendioxid nach einem eventuellen Prereformer dem Einsatzgas zugemischt wird, muss dann in diesem Bereich der Anlage normalerweise auch Dampf zum Einsatzgasgemisch zugegeben werden, um ein gefordertes S/C-Verhältnis im Einsatzgasgemisch herzustellen.

Wie Tabelle 4 zeigt, entspricht die Menge an Abgasen (Offgasen) aus dem kryogenen Destillationsverfahren zur CO-Reinigung (Coldbox, CB) ungefähr 25 % bis 50 % der Gesamtheizgasmenge. Diese Offgase umfassen ein methanhaltiges Gas (CH₄) und ein H₂-reiches Flashgas (FG). Bei Anlagen mit einer Stickstoffentfernung in der kryogenen Destillationsanlage fällt zudem noch ein stickstoffhaltiges Offgas an, das normalerweise aber keinen nennenswerten Anteil am Energiegehalt des Heizgasgemisches hat. Das Offgas der Druckwechseladsorption (PSA) hat einen Anteil von ca. 20 % bis 35 % am Gesamtheizgas. Die Luftvorwärmtemperatur beeinflusst vor allem die Dampfexportmenge.

Indem das methanreiche Gas aus der kryogenen Destillationsanlage zum Einsatzgas zurückgeführt wird, und indem man, je nach Bedarf, auch die externe Heizgasmenge reduziert, ist es möglich, eine große Menge an wasserstoffreichem Gas dem Heizgasgemisch beizumischen und so das H₂/CO Molverhältnis der H₂- und CO-Produktströme in hohem Masse zu reduzieren, ohne dass die Einsatzparameter geändert werden oder dass Anlageteile überdimensioniert werden. Dies wird in den Tabellen 5, 6 und 7 dargestellt.

**Tabelle 4: Heizgasverteilung von Synthesegasanlagen (abgeleitete Fälle F aus Tabellen 1 bis 3) für eine Luftvorwärmtemperatur von 340 °C und einen Dampfexport bei 30 barg und 300 °C**

| **Fall** | | **F** | **F2** | **F2-I** | **F2-II** | **F2-III** |
|---|---|---|---|---|---|---|
| Luftvorwärmtemperatur | °C | 340 | 340 | 340 | 340 | 340 |
| Dampfexportmenge | t/h | 14.2 | 10.8 | 9.4 | 7.7 | 3.5 |
| Gesamtheizgasmenge | Gcal/h | 58.9 | 48.39 | 44.74 | 41.14 | 34.22 |
| • davon PSA-Restgasanteil | % | 33.1 | 29.52 | 27.93 | 25.95 | 20.82 |
| • davon CB CH₄-Anteil | % | 41.8 | 35.00 | 31.64 | 27.44 | 17.00 |
| • davon CB FG-Anteil | % | 7.0 | 6.32 | 6.02 | 5.65 | 4.69 |
| • davon externer Heizgasanteil | % | 18.1 | 29.17 | 34.41 | 40.96 | 57.50 |

**Tabelle 5: Heizgasverteilung von Synthesegasanlagen (abgeleiteter Fall F aus Tabelle 1) für eine Luftvorwärmtemperatur von 450 °C und einen Dampfexport bei 30 barg und 300 °C - Einfluss der Beimischung von wasserstoffreichem Gas zum Heizgasgemisch auf das H₂/CO-Produktverhältnis für Anlagen ohne Kohlendioxid Rückführung und ohne Einsatz von extern gewonnenem Kohlendioxid**

| **Fall** | | **F** | **F mit CH4-Rückführung ins Einsatzgas** | **F mit CH4-Rückführung ins Einsatzgas und wasserstoffreichem Gas in Heizgas** |
|---|---|---|---|---|
| Luftvorwärmtemperatur | °C | 450 | 450 | 450 |
| Einsatzgasstrom | Nm³/h | 16850 | 14266 | 14266 |
| H₂-Produktstrom | Nm³/h | 36250 | 36250 | 26250 |
| CO-Produktstrom | Nm³/h | 10000 | 10000 | 10000 |
| Dampfexportmenge | t/h | 8.9 | 9.5 | 8.1 |
| Gesamtheizgasmenge | Gcal/h | 55.26 | 55.58 | 54.59 |
| • davon PSA-Restgasanteil | % | 35.28 | 35.08 | 35.72 |
| • davon CB CH₄-Anteil | % | 44.57 | 4.42 | 4.50 |
| • davon CB FG-Anteil | % | 7.45 | 7.41 | 7.54 |
| • davon externer Heizgasanteil | % | 12.69 | 53.09 | 5.01 |
| • davon wasserstoffreiches Gas | % | 0.00 | 0.00 | 47.23 |

**Tabelle 6: Heizgasverteilung von Synthesegasanlagen (abgeleiteter Fall F2 aus Tabelle 2) für eine Luftvorwärmtemperatur von 340 °C und einen Dampfexport bei 30 barg und 300 °C - Einfluss der Beimischung von wasserstoffreichem Gas zum Heizgasgemisch auf das H₂/CO-Produktverhältnis für Anlagen mit Rückführung des aus dem Synthesegas abgetrennten Kohlendioxids ins Einsatzgas und ohne Einsatz von extern gewonnenem Kohlendioxid**

| **Fall** | | **F2** | **F2 mit CH4-Rückführung ins Einsatzgas** | **F2 mit CH4-Rückführung ins Einsatzgas und wasserstoffreichem Gas in Heizgas** |
|---|---|---|---|---|
| Luftvorwärmtemperatur | °C | 340 | 340 | 340 |
| Einsatzgasstrom | Nm³/h | 12910 | 11136 | 11136 |
| H₂-Produktstrom | Nm³/h | 26715 | 26715 | 16715 |
| CO-Produktstrom | Nm³/h | 10000 | 10000 | 10000 |
| Dampfexportmenge | t/h | 10.8 | 11.2 | 9.3 |
| Gesamtheizgasmenge | Gcal/h | 48.39 | 48.55 | 47.25 |
| • davon PSA-Restgasanteil | % | 29.52 | 29.42 | 30.23 |
| • davon CB CH₄-Anteil | % | 35.00 | 3.49 | 3.49 |
| • davon CB FG-Anteil | % | 6.32 | 6.30 | 6.30 |
| • davon externer Heizgasanteil | % | 29.17 | 60.79 | 5.02 |
| • davon wasserstoffreiches Gas | % | 0.00 | 0.00 | 53.10 |

**Tabelle 7: Heizgasverteilung von Synthesegasanlagen (abgeleiteter Fall F2-II aus Tabelle 3) für eine Luftvorwärmtemperatur von 340 °C und einen Dampfexport bei 30 barg und 300 °C - Einfluss der Beimischung von wasserstoffreichem Gas zum Heizgasgemisch auf das H₂/CO-Produktverhältnis für Anlagen mit Rückführung des aus dem Synthesegas abgetrennten Kohlendioxids ins Einsatzgas und mit Einsatz von 2000 Nm³/h extern gewonnenen Kohlendioxids**

| **Fall** | | **F2-II** | **F2-II mit CH4-Rückführung ins Einsatzgas** | **F2-II mit CH4-Rückführung ins Einsatzgas und wasserstoffreichem Gas in Heizgas** |
|---|---|---|---|---|
| Luftvorwärmtemperatur | °C | 340 | 340 | 340 |
| Einsatzgasstrom | Nm³/h | 10175 | 8990 | 8990 |
| H₂-Produktstrom | Nm³/h | 20205 | 20205 | 10950 |
| CO-Produktstrom | Nm³/h | 10000 | 10000 | 10000 |
| Dampfexportmenge | t/h | 7.7 | 8.1 | 6.5 |
| Gesamtheizgasmenge | Gcal/h | 41.14 | 41.30 | 39.99 |
| • davon PSA-Restgasanteil | % | 25.95 | 25.84 | 26.69 |
| • davon CB CH₄-Anteil | % | 27.44 | 2.73 | 2.82 |
| • davon CB FG-Anteil | % | 5.65 | 5.63 | 5.81 |
| • davon externer Heizgasanteil | % | 40.96 | 65.79 | 5.01 |
| • davon wasserstoffreiches Gas | % | 0.00 | 0.00 | 59.66 |

Die Tabellen 5, 6 und 7 basieren auf Rückführraten von 90% des durch die kryogene Destillation abgetrennten methanhaltigen Stromes in das Einsatzgasgemisch. Dies erlaubt es, den ins Einsatzgas rückgeführten methanhaltigen Strom unabhängig von Schwankungen konstant zu halten. Zum Ausgleich wird die externe Heizgasmenge variiert. Diese wird auf ca. 5% voreingestellt, was es erlaubt, Schwankungen in Teilen der Heizgasmenge auszugleichen und gleichzeitig bei Ausfall einer Heizgasmenge (z. B. durch plötzliches Abschalten der Druckwechselanlage anlässlich einer Ventilfehlfunktion) erlaubt die erforderliche Menge an Heizgas durch rasches Erhöhen der externen Heizgasmenge auszugleichen so dass die Dampfreformierungsanlage weiterbetrieben werden kann.

Außer der Verringerung des H₂/CO-Produktverhältnisses durch Einspeisen von wasserstoffhaltigem Gas in das Heizgasgemisch kann dieses Verhältnis durch Einspeisen von CO-Produktgas in das Heizgasgemisch auch zeitweise erhöht werden. Dies ist insbesondere dann der Fall wenn z. B. in einem CO-Pipelinesystem (CO-Verbund) ein CO-Abnehmer plötzlich ausfällt und dann das Verbrennen von überschüssigem CO in einem Fackelsystem vermieden werden soll, bis die Dampfreformierungsanlage auf den aktuellen CO-Bedarf heruntergefahren wurde oder bis der ausgefallene CO-Abnehmer wieder CO vom CO-Verbund abnimmt. Auch kann während vorgesehener Wartungsarbeiten an einem CO-Abnehmer die ausgeleitete CO-Menge reduziert werden, ohne dass der Betriebspunkt der Synthesegasanlage geändert werden muss. Die Beschreibung der obigen Fälle, die zu einer Einspeisung von CO-Produktgas in das Heizgasgemisch führen und damit zu einer Erhöhung des H₂/CO-Produktverhältnisses, sind auch für die Einspeisung von wasserstoffreichem Gas oder H₂-Produktgas möglich, so dass beispielsweise bei Wegfall eines H₂-Abnehmers überschüssiges H₂ zum Heizgasgemisch geleitet wird.

Auch ist die zeitweise Einspeisung von CO oder H₂ in das Heizgasgemisch von Vorteil, wenn die Hochfahrrate (von einem definierten Anlagenbetriebspunkt, der mindestens dem minimalen Betriebspunkt der Anlage entspricht - welcher normalerweise zwischen 20 % und 40 % der Auslegungsmenge eines Produktstromes entspricht - auf einen anderen Anlagenbetriebspunkt mit höherem Produktstrom) eines CO- oder H₂-Abnehmers höher ist als die Hochfahrrate der gesamten Dampfreformierungsanlage einschließlich der CO-und/oder H₂-Reinigungsanlage. Typische Werte liegen hierbei im Bereich von 0,1 %/min bis maximal 2 %/min, bzw. vorzugsweise im Bereich von 0,2 %/min bis 1 %/min, bezogen auf den Auslegungspunkt eines Produktstroms. So entspricht eine Auslegung auf 10000 Nm³/h CO-Produktstrom einer Hochfahrrate von 1 %/min einer Laststeigerung von 100 Nm³ CO pro Minute. In diesem Fall kann ein Teil des Produktgases dem Heizgasgemisch beigemischt werden. Die gleiche Problemstellung ist gegeben wenn, beispielsweise durch den Ausfall eines Abnehmers bedingt, die Menge der Produktströme reduziert werden muss.

### Gewerbliche Anwendbarkeit

Die Erfindung liefert ein Verfahren und eine Anlage, bei denen das H₂/CO-Molverhältnis über die aus dem Stand der Technik bekannten Grenzen bzgl. der Anlagenauslegung hinaus verändert werden kann. Die Produktion kann damit noch weitgehender an den Bedarf der Gasabnehmer angepasst werden. Ferner können zeitlich schwankende Betriebzustände innerhalb des Anlagenverbundes, oder schwankende Bedarfe der H₂ bzw. CO abnehmenden Verbraucher innerhalb dieses Verbundes, befriedigt werden, ohne dass der zuvor festgelegte Betriebspunkt der Reformeranlage verlassen werden muss.

### Bezugszeichenliste

- 1: Einsatzgasgemisch
- 2: Heizgasgemisch
- 3: Reformer
- 4: Rohsynthesegas
- 5: Anlage zur Abtrennung von Kohlendioxid
- 6: Kohlendioxid
- 7: Rohsynthesegas, kohlendioxidfrei
- 8: Anlage zur Auftrennung von Rohsynthesegas
- 9: Wasserstoffreiches Gas
- 10: Kohlenmonoxidreiches Gas (CO-Produktgas)
- 11: Methanreiches Gas zum Heizgasgemisch
- 11a: Methanreiches Gas zum Einsatzgasgemisch
- 12: Druckwechseladsorptionsanlage
- 13: Gasförmige Verunreinigungen
- 14: Wasserstoffreiches Gas, gereinigt (H₂-Produktgas)
- 15: Extern gewonnenes Kohlendioxid
- 16: Kohlenmonoxidreiches Gas zum Heizgasgemisch
- 17: Wasserstoffreiches Gas nach Reinigung
- 18: Wasserstoffreiches Gas vor Reinigung
- 19: Rohsynthesegas zur CO-Shift-Stufe
- 20: CO-Shift-Stufe
- 21: Geshiftetes Synthesegas zur Wasserstoffreinigung

## Patentansprüche

1. Verfahren zur kontinuierlichen Umwandlung eines kohlenwasserstoffhaltigen Einsatzgases in ein Kohlenmonoxid und Wasserstoff umfassendes Synthesegas, umfassend die folgenden, nacheinander durchgeführten Verfahrensschritte:
a) Bereitstellen eines Einsatzgasgemisches, welches kohlenwasserstoffhaltiges Gas und Wasserdampf umfasst, sowie eines Heizgasgemisches, welches ein Brenngas und ein sauerstoffreiches Gas umfasst,
b) Spalten des Einsatzgasgemisches unter Reformierungsbedingungen durch katalytische Dampfreformierung in einem durch Brenner befeuerten Röhrenreformer in ein Wasserstoff, Kohlenmonoxid, Kohlendioxid und Methan enthaltendes Rohsynthesegas, wobei die für das Spalten notwendige Wärme, die indirekt auf das Einsatzgasgemisch übertragen wird, durch Verbrennen des Heizgasgemisches erzeugt wird, wobei beim Normalbetrieb des Verfahrens ein Basis-H₂/CO-Verhältnis VB erhalten wird,
c) Abtrennen des Kohlendioxids aus dem Rohsynthesegas,
d) Auftrennen des Rohsynthesegases in ein wasserstoffreiches, ein kohlenmonoxidreiches und ein methanreiches Gas, wobei das wasserstoffreiche Gas optional einem weiteren Reinigungsschritt zugeführt wird und ansonsten als H₂-Produktgas aus dem Verfahren ausgeleitet wird und das kohlenmonoxidreiche Gas als CO-Produktgas der weiteren Verwendung außerhalb des Verfahrens zugeführt wird,
e) Optional Reinigen des wasserstoffreichen Gases durch Abtrennung von gasförmigen Verunreinigungen und Beimischen dieser zum Heizgasgemisch und Ausleiten des gereinigten, wasserstoffreichen Gases als H₂-Produktgas zur weiteren Verwendung außerhalb des Verfahrens,
**dadurch gekennzeichnet, dass**
f) zumindest ein Teil des gemäß Schritt d) erhaltenen methanreichen Gases dem Einsatzgasgemisch beigemischt wird und dass
g) zumindest ein Teil des H₂-Produktgases und/oder ein gegenüber dem Normalbetrieb des Verfahrens erhöhter Anteil des wasserstoffreichen Gases dem Heizgasgemisch beigemischt wird, so dass das H₂/CO-Verhältnis V1 gegenüber dem Basis-H₂/CO-Verhältnis VB auf einen Zielwert V1 < VB abgesenkt wird.

2. Verfahren zur kontinuierlichen Umwandlung eines kohlenwasserstoffhaltigen Einsatzgases in ein Kohlenmonoxid und Wasserstoff umfassendes Synthesegas, umfassend die folgenden, nacheinander durchgeführten Verfahrensschritte:
a) Bereitstellen eines Einsatzgasgemisches, welches kohlenwasserstoffhaltiges Gas und Wasserdampf umfasst, sowie eines Heizgasgemisches, welches ein Brenngas und ein sauerstoffreiches Gas umfasst,
b) Spalten des Einsatzgasgemisches unter Reformierungsbedingungen durch katalytische Dampfreformierung in einem durch Brenner befeuerten Röhrenreformer in ein Wasserstoff, Kohlenmonoxid, Kohlendioxid und Methan enthaltendes Rohsynthesegas, wobei die für das Spalten notwendige Wärme, die indirekt auf das Einsatzgasgemisch übertragen wird, durch Verbrennen des Heizgasgemisches erzeugt wird, wobei beim Normalbetrieb des Verfahrens ein Basis-H₂/CO-Verhältnis VB erhalten wird,
c) Abtrennen des Kohlendioxids aus dem Rohsynthesegas,
d) Auftrennen des Rohsynthesegases in ein wasserstoffreiches, ein kohlenmonoxidreiches und ein methanreiches Gas, wobei das wasserstoffreiche Gas optional einem weiteren Reinigungsschritt zugeführt wird und ansonsten als H₂-Produktgas aus dem Verfahren ausgeleitet wird und das kohlenmonoxidreiche Gas als CO-Produktgas der weiteren Verwendung außerhalb des Verfahrens zugeführt wird,
e) Optional Reinigen des wasserstoffreichen Gases durch Abtrennung von gasförmigen Verunreinigungen und Beimischen dieser zum Heizgasgemisch und Ausleiten des gereinigten, wasserstoffreichen Gases als H₂-Produktgas zur weiteren Verwendung außerhalb des Verfahrens,
**dadurch gekennzeichnet, dass**
f) zumindest ein Teil des gemäß Schritt d) erhaltenen methanreichen Gases dem Einsatzgasgemisch beigemischt wird und dass
g) zumindest ein Teil des CO-Produktgases und/oder ein gegenüber dem Normalbetrieb des Verfahrens erhöhter Anteil des kohlenmonoxidreichen Gases dem Heizgasgemisch beigemischt wird, so dass das H₂/CO-Verhältnis V1 gegenüber dem Basis-H₂/CO-Verhältnis VB auf einen Zielwert V1 > VB erhöht wird.

3. Verfahren nach Anspruch 1 oder 2, **dadurch gekennzeichnet, dass** der dem Einsatzgasgemisch beigemischte Anteil methanreichen Gases mindestens 50 %, bevorzugt mindestens 70 %, meist bevorzugt mindestens 90 % des gemäß Schritt d) erhaltenen methanreichen Gases beträgt.

4. Verfahren nach Anspruch 1 oder 3, **dadurch gekennzeichnet, dass** dem Heizgasgemisch mindestens 20 %, bevorzugt mindestens 30 %, meist bevorzugt mindestens 40 % des H₂-Produktgases bzw. des wasserstoffreichen Gases zum Heizgasgemisch beigemischt werden.

5. Verfahren nach Anspruch 2 oder 3, **dadurch gekennzeichnet, dass** dem Heizgasgemisch mindestens 20 %, bevorzugt mindestens 30 %, meist bevorzugt mindestens 40 % des CO-Produktgases zum Heizgasgemisch beigemischt werden.

6. Verfahren gemäß eines der vorigen Ansprüche, **dadurch gekennzeichnet, dass** es in den folgenden zeitlich aufeinanderfolgenden Schritten durchgeführt wird:
Schritt 1: Das H₂-Produktgas oder das wasserstoffreiche Gas oder das CO-Produktgas wird vollständig dem Heizgasgemisch beigemischt.
Schritt 2: Das H₂-Produktgas oder das wasserstoffreiche Gas oder das CO-Produktgas wird zu einem Anteil dem Heizgasgemisch beigemischt und zum anderen Anteil zur weiteren Verwendung außerhalb des Verfahrens ausgeleitet, wobei der ausgeleitete Anteil kontinuierlich oder schrittweise erhöht oder reduziert wird, bis der Zielwert V1 des H₂/CO-Verhältnisses erreicht ist.

7. Verfahren gemäß eines der vorigen Ansprüche, **dadurch gekennzeichnet, dass** das aus dem Rohsynthesegas abgetrennte Kohlendioxid zumindest zum Teil dem Einsatzgasgemisch beigemischt wird.

8. Verfahren gemäß eines der vorigen Ansprüche, **dadurch gekennzeichnet, dass** außerhalb des Verfahrens erzeugtes Kohlendioxid dem Einsatzgasgemisch beigemischt wird.

9. Verfahren gemäß einem der vorhergehenden Ansprüche, **dadurch gekennzeichnet, dass** die Trennung des Rohsynthesegases in ein wasserstoffreiches, ein kohlenmonoxidreiches und ein methanreiches Gas mittels eines kryogenen Destillationsverfahrens durchgeführt wird, wobei ein weiterer, brennbare Gaskomponenten enthaltender Gasstrom (Coldbox-Flashgas) erhalten wird, der mindestens teilweise dem Heizgasgemisch und/oder dem Einsatzgasgemisch beigemischt wird.

10. Verfahren gemäß einem der vorhergehenden Ansprüche, **dadurch gekennzeichnet, dass** die Reinigung des wasserstoffreichen Gases durch Abtrennung von gasförmigen Verunreinigungen mittels eines Druckwechseladsorptionsverfahrens (PSA) durchgeführt wird, wobei die gasförmigen Verunreinigungen (PSA-Offgas) mindestens teilweise dem Heizgasgemisch beigemischt werden.

11. Anlage zur kontinuierlichen Umwandlung eines kohlenwasserstoffhaltigem Einsatzgases in ein Kohlenmonoxid und Wasserstoff umfassendes Synthesegas, umfassend die folgenden Mittel und Anlagenteile:
a) Mittel zur Zuführung eines Einsatzgasgemisches, welches kohlenwasserstoffhaltiges Gas und Wasserdampf umfasst, sowie eines Heizgasgemisches, welches ein Brenngas und ein sauerstoffreiches Gas umfasst, aus externen Quellen zur Anlage, sowie Mittel für den Transfer des bzw. der Gase zwischen den Anlagenteilen und aus der Anlage heraus zu deren weiteren Verwendung,
b) Anlagenteil zur Dampfreformierung des Einsatzgasgemisches zu einem Rohsynthesegas, mit einem durch Brenner befeuerten Röhrenreformer, umfassend:
ein Gehäuse,
Katalysatorrohre, die in dem Gehäuse angeordnet und mit einer Katalysatorschüttung gefüllt sind und durch die das Einsatzgasgemisch hindurch geleitet und in Wasserstoff, Kohlenmonoxid, Kohlendioxid und Methan enthaltendes Rohsynthesegas reformiert wird,
Brenner, die mit dem Heizgasgemisch betrieben werden und die so im Gehäuse installiert sind, dass deren Flammen in das Gehäuse hinein reichen und dabei die für das Reformieren notwendige Wärme erzeugen und auf die Katalysatorrohre, und damit indirekt auf das Einsatzgasgemisch übertragen,
c) Anlagenteil zum Abtrennen des Kohlendioxids aus dem Rohsynthesegas,
d) Anlagenteil zum Auftrennen des Rohsynthesegases in ein wasserstoffreiches Gas, das entweder der Behandlung in Schritt e) oder der weiteren Verwendung außerhalb der Anlage zugeführt wird, weiterhin in ein kohlenmonoxidreiches Gas, das der weiteren Verwendung außerhalb der Anlage zugeführt wird und ein methanreiches Gas, das dem Einsatzgasgemisch und/oder dem Heizgasgemisch beigemischt wird,
e) Optional einen Anlagenteil zum Reinigen des wasserstoffreichen Gases durch Abtrennung von gasförmigen Verunreinigungen, Mittel zum Beimischen dieser zum Heizgasgemisch und Mittel zum Ausleiten des gereinigten, wasserstoffreichen Gases als H₂-Produktgas zur weiteren Verwendung außerhalb des Verfahrens,
**gekennzeichnet durch**
f) Mittel zum Beimischen zumindest ein Teils des in Anlagenteil d) erhaltenen methanreichen Gases zum Einsatzgasgemisch und
g) Mittel zum Beimischen zumindest ein Teils des H₂-Produktgases und/oder des wasserstoffreichen Gases zum Heizgasgemisch oder Mittel zum Beimischen zumindest ein Teils des CO-Produktgases zum Heizgasgemisch,
h) Mittel zum Regeln der Mengenströme der dem Einsatzgasgemisch und dem Heizgasgemisch beizumischenden Gase.

12. Anlage nach Anspruch 11, **gekennzeichnet durch** Mittel zur Rückführung des in Anlagenteil c) aus dem Rohsynthesegas abgetrennten Kohlendioxids zum Einsatzgasgemisch.

13. Anlage nach Anspruch 11 oder 12, **gekennzeichnet durch** Mittel zur Zuführung von außerhalb des Verfahrens erzeugten Kohlendioxids zum Einsatzgasgemisch.

14. Anlage nach einem der vorigen Ansprüche, **dadurch gekennzeichnet, dass** der Anlagenteil d) zur Trennung des Rohsynthesegases in ein wasserstoffreiches, ein kohlenmonoxidreiches und ein methanreiches Gas als kryogenes Destillationsverfahren ausgestaltet ist, wobei ferner Mittel zum Ausleiten eines weiteren, brennbare Gaskomponenten enthaltenden Gasstroms (Coldbox-Flashgas) umfasst werden.

15. Anlage nach einem der vorigen Ansprüche, **dadurch gekennzeichnet, dass** der Anlagenteil e) zur Reinigung des wasserstoffreichen Gases durch Abtrennung von gasförmigen Verunreinigungen als Druckwechseladsorptionsverfahren (PSA) ausgestaltet ist, wobei ferner Mittel zum Ausleiten eines weiteren, gasförmige Verunreinigungen (PSA-Offgas) enthaltenden Gasstroms und zum mindestens teilweise Beimischen dieser zum Heizgasgemisch umfasst werden.
